# EUROPÄISCHE PATENTSCHRIFT

(11) **EP 3 698 071 B1**
(45) Veröffentlichungstag und Bekanntmachung des Hinweises auf die Patenterteilung: **20.04.2022**
(21) Anmeldenummer: 18782355.4
(22) Anmeldetag: 25.09.2018
(51) Int. Cl.: F16H 63/34, F16H 21/10, F16H 37/12, F16H 61/32, F16H 25/20

(54) **BETÄTIGUNGSANORDNUNG FÜR EINE PARKSPERRE FÜR EIN KRAFTFAHRZEUG**
ACTUATION ARRANGEMENT FOR A PARKING LOCK FOR A MOTOR VEHICLE
DISPOSITIF D'ACTIONNEMENT D'UN FREIN DE STATIONNEMENT D'UN VÉHICULE AUTOMOBILE

(30) Priorität: 18.10.2017 DE 102017218638
(43) Veröffentlichungstag der Anmeldung: 26.08.2020
(73) Patentinhaber: VOLKSWAGEN AKTIENGESELLSCHAFT, 38440 Wolfsburg (DE)
(72) Erfinder: PETRZIK, Gunther, 52070 Aachen (DE)
(86) Internationale Anmeldenummer: PCT/EP2018/075897
(87) Internationale Veröffentlichungsnummer: WO 2019/076587

(56) Entgegenhaltungen:
- DE-A1-102009 035 348
- DE-A1-102011 056 725
- DE-A1-102012 004 395
- DE-A1-102012 011 424
- DE-A1-102016 224 660

## Beschreibung

Die Erfindung bezieht sich auf eine Betätigungsanordnung für eine Parksperre für ein Kraftfahrzeug, umfassend
- einen Stellantrieb mit einem relativ zu einer Gehäuseplatte linear zwischen einer Zentralstellung und einer ersten ausgelenkten Schiebestellung verschieblichen Stellschieber,
- einen zwischen einer Einrückstellung und einer Ausrückstellung relativ zur Gehäuseplatte linear verschieblichen Parksperrenschieber, der über eine Parksperrensteuerstrecke so mit einer Parksperre koppelbar ist, dass in seiner durch einen gehäuseplattefesten Anschlag definierten Einrückstellung ein Einlegen der Parksperre erlaubt und in seiner Ausrückstellung unterbunden ist, und
- einen Schwenkhebel, der sowohl an einer Stellschieber-Lagerstelle an dem Stellschieber als auch an einer Parksperrenschieber-Lagerstelle an dem Parksperrenschieber schwenkbar gelagert ist und der zudem an einer ersten weiteren Anlenkstelle schwenkbar gelagert ist, sodass mittels einer Verschiebung des Stellschiebers eine entsprechend hebelübersetzte Verschiebung des Parksperrenschiebers bewirkbar ist.

Eine derartige Betätigungsanordnung ist in der nachveröffentlichten deutschen Patentanmeldung DE 10 2016 224 660.7 beschrieben. Weitere Beispiele für Parksperren des Standes der Technik zeigen die DE102009035348 A1, welche die Basis für die zweiteilige Fassung von Anspruch 1 bildet, sowie die DE102011056725 A1.

Parksperrenanordnungen für Automatikgetriebe von Kraftfahrzeugen sind dem Fachmann allgemein bekannt. Typischerweise umfassen sie ein mit einer zentralen Welle des Getriebes verbundenes Sperrrad mit einer äußeren Sperrverzahnung, in die bedarfsweise eine am Getriebegehäuse angelenkte, d.h. schwenkbar gelagerte Sperrklinke einrasten und dadurch eine Rotation des Sperrrades und der mit dieser drehfest verbundenen Getriebewelle unterbinden kann. Derartige Parksperrenanordnungen sind verschiedenen gesetzlichen und Bedienungskomfort-bedingten Vorgaben unterworfen. So ist vorgeschrieben, dass auch bei Ausfall sämtlicher Betätigungssysteme ein Einlegen der Parksperre bei abgestelltem Fahrzeug gewährleistet ist. Andererseits muss vermieden werden, dass die Parksperre aufgrund von Systemfehlern während des Fahrzeugbetriebs unbeabsichtigt eingelegt wird.

Schließlich soll es auch bei komplettem Systemausfall möglich sein, beispielsweise zum Abschleppen eines Fahrzeugs, dessen Parksperre auszulegen.

Die üblichen Ansätze betreffen Anordnungen im Bereich der Sperrklinke bzw. des Sperrrades. Dies ist vorwiegend der üblichen hydraulischen oder mechanischen Ansteuerung von Parksperren geschuldet. Im Hinblick auf die zunehmende Elektrifizierung der Getriebesteuerung erscheint es jedoch wünschenswert, die Betätigungsanordnung für die Parksperre von der eigentlichen Sperrmechanik räumlich unabhängig zu gestalten und mit sämtlichen Funktionalitäten an einem gut zugänglichen und den erforderlichen Bauraum bietenden Platz im Fahrzeug zu positionieren. Dabei bedarf es selbstverständlich einer Parksperrensteuerstrecke, die ein mechanisches Betätigungsorgan in der Betätigungsvorrichtung, insbesondere den Parksperrenschieber, mit der eigentlichen Sperrmechanik verbindet. Diese Sperrklinkensteuerstrecke kann hydraulisch, mechanisch, elektrisch oder auf andere Weise ausgebildet sein und ist nicht Gegenstand der vorliegenden Erfindung, ebensowenig wie die konstruktive Gestaltung der eigentlichen Sperrmechanik, die nachfolgend daher allgemein als "Parksperre" angesprochen wird.

Die bekannte Vorrichtung sieht ein 2-Schienen-System vor. Eine erste, durch einen elektromotorisch angetriebenen Spindeltrieb realisierte Schiene dient der direkten Ansteuerung eines Stellschiebers. Eine zweite, parallele Schiene trägt den Parksperrenschieber als das eigentliche Betätigungsorgan für die Parksperre am anderen Ende der Parksperrensteuerstrecke. Beide Schieber sind über einen Schwenkhebel miteinander gekoppelt. Dieser Schwenkhebel ist zusätzlich an einer weiteren Anlenkstelle angelenkt, welche sich auf einem seinerseits schwenkbar an der Gehäuseplatte gelagerten Grundhebel befindet. Durch die Lagerung des Schwenkhebels an drei Punkten ist es möglich, durch eine Verschiebung des Stellschiebers eine hebelübersetzte Verschiebung des Parksperrenschiebers zu bewirken, wobei die konkrete Schiebebewegung von der aktuellen Stellung des Grundhebels abhängt. Diese ist insbesondere zwischen zwei Stellungen verschwenkbar, von denen eine mit dem Spannen einer dabei als Energiespeicher dienenden Vorspannfeder verbunden ist.

Nachteilig bei der bekannten Vorrichtung sind hohe innere Kräfte, insbesondere Torsionskräfte, die beim Betrieb auftreten und eine starke Auslegung der beteiligten Bauteile, insbesondere deren Ausgestaltung als Blechteile, erfordern. Das ist im Hinblick sowohl auf die Kosten als auch auf das Gewicht im Vergleich zu Kunststoffteilen ungünstig.

Es ist die Aufgabe der vorliegenden Erfindung, Betätigungskräfte innerhalb der Betätigungsmechanik zu reduzieren, um insbesondere den Anteil der in Kunststoff ausführbaren Bauteile erhöhen zu können.

Diese Aufgabe wird in Verbindung mit den Merkmalen des Oberbegriffs von Anspruch 1 dadurch gelöst, dass die erste weitere Anlenkstelle auf einem relativ zur Gehäuseplatte linear verschieblichen Grundschieber liegt, der zwischen einer Grundstellung und einer Vorspannstellung verschiebbar ist und der mittels einer Vorspannfeder in Richtung seiner Grundstellung federkraftbeaufschlagt und in seiner entgegen der Vorspannfederkraft verschobenen Vorspannstellung mittels einer der Vorspannfederkraft entgegenwirkenden, elektromagnetischen Verriegelung haltbar ist.

Bevorzugte Ausführungsformen der Erfindung sind Gegenstand der abhängigen Patentansprüche.

Wie auch bei der Parksperre der nachveröffentlichten DE102016224660 A1 dient als eigentliches Betätigungsorgan der linear verschiebliche Parksperrenschieber. Dieser ist zwischen einer Einrückposition und einer Ausrückposition verschieblich und ist über die Parksperrensteuerstrecke mit der eigentlichen Sperrklinkenmechanik gekoppelt. Die Einrückstellung des Parksperrenschiebers entspricht dabei dem Einlegezustand der Parksperre; seine Ausrückstellung deren Auslegezustand. Wie dies im Bereich der eigentlichen Sperrklinkenmechanik im Einzelnen umgesetzt ist, ist für die vorliegende Erfindung nicht relevant. Typischerweise ist der Auslegezustand zwingend mit einem fehlenden Zahneingriff zwischen Sperrklinke und Sperrrad verbunden, während der Einlegezustand den Zahneingriff lediglich unter weiteren Randbedingungen, z.B. Unterschreitung einer sehr niedrigen Grenzgeschwindigkeit des Fahrzeugs, Zahn-auf-Lücke statt Zahn-auf-Zahn-Stellung etc. erlaubt.

Die Verschiebung des Parksperrenschiebers zwischen seiner Einrückstellung und seiner Ausrückstellung erfolgt mittelbar über die Bewegung des hebelgekoppelten, ebenfalls linear verschieblichen Stellschiebers. Beispielsweise und bevorzugt kann der Stellschieber über einen mittels eines Elektromotors antreibbaren Spindeltriebs verschoben werden. Der Stellschieber kann zwischen wenigstens zwei Schiebestellungen verschoben werden, die hier zur zunächst rein sprachlichen Unterscheidbarkeit als Zentralstellung und als erste ausgelenkte Schiebestellung angesprochen werden.

Zur Übertragung der Translationsbewegung des Stellschiebers auf den Parksperrenschieber sind diese beiden Elemente über den Schwenkhebel miteinander gekoppelt. Der Schwenkhebel ist sowohl am Stellschieber als auch am Parksperrenschieber angelenkt. Um eine Hebelübersetzung der Bewegung zwischen dem Stellschieber und dem Parksperrenschieber zu erreichen, muss der Schwenkhebel zusätzlich an einer weiteren Anlenkstelle gelagert sein, die hier als erste weitere Anlenkstelle bezeichnet wird. Der Fachmann wird erkennen, dass die Begriffe "anlenken" und "schwenkbar lagern" hier synonym verwendet werden. Die oben gemachte Unterscheidung zwischen einer "Lagerstelle" des Schwenkhebels (am Stellschieber bzw. Parksperrenschieber) und einer (weiteren) "Anlenkstelle" des Schwenkhebels ist daher nicht funktionaler sondern rein sprachlicher Natur zur leichteren gedanklichen Unterscheidbarkeit der entsprechend bezeichneten Elemente; eine konstruktive Implikation ist damit nicht verbunden.

Die reine Überführbarkeit des Parksperrenschiebers zwischen seiner Ein- und seiner Ausrückstellung könnte bereits gewährleistet sein, wenn sich die erste weitere Anlenkstelle unmittelbar an der Gehäuseplatte, beispielsweise einem karosseriefesten Gehäuse, befinden würde. Es ist jedoch erfindungsgemäß vorgesehen, dass der Schwenkhebel über diese erste weitere Anlenkstelle an einem Grundschieber angelenkt ist, der seinerseits verschieblich an der Gehäuseplatte gelagert ist. Hierdurch wird erreicht, dass die Position der ersten weiteren Anlenkstelle und damit auch die Hebelkopplung zwischen Stellschieber und Parksperrenschieber in Abhängigkeit von der Schiebestellung des Grundschiebers variiert werden kann.

Der Grundschieber ist zwischen wenigstens zwei Schiebestellungen verschiebbar, nämlich einer hier als Grundstellung bezeichneten Schiebestellung und einer hier als Vorspannstellung bezeichneten Schiebestellung. Mittels der Vorspannfeder ist der Grundschieber in Richtung seiner Grundstellung federvorgespannt. Die Überführung in die Vorspannstellung erfordert eine Verschiebung des Grundschiebers entgegen der Vorspannfederkraft der Vorspannfeder. Um den Grundschieber unabhängig von der Stellung der anderen Schieber und entgegen der Vorspannfederkraft in seiner Vorspannstellung halten zu können, ist eine elektromagnetische Verriegelung vorgesehen. Der Normalbetrieb einer mit einer erfindungsgemäßen Betätigungsanordnung ausgestatteten Betätigungsanordnung, d.h. das ordnungsgemäße Ein- und Auslegen der Parksperre, kann bei in seiner Vorspannstellung befindlichem Grundschieber erfolgen, in die dieser beim ordnungsgemäßen Fahrzeugstart überführt wird. Die Sicherheits- und Komfortfunktionen können hingegen von der Grundstellung des Grundschieber ausgehen, in die er aufgrund seiner Federvorspannung bei Systemausfall automatisch überführt wird.

Diese Merkmale stellen die erfindungsgemäße Grundlage für die torsionskräftereduzierte Realisierung der oben bereits angesprochenen Sicherheits- und Komfortfunktionen dar, die in ihren kinematischen Details unterschiedlich umgesetzt sein können. Die Wirkungsweise eines repräsentativen Ausführungsbeispiels soll weiter unten im Rahmen der speziellen Beschreibung näher diskutiert werden, ohne dass die Erfindung auf diese Ausführungsform beschränkt sein soll.

Bevorzugt ist vorgesehen, dass jede der zwei Funktionseinheiten Vorspannfeder und elektromagnetische Verriegelung an dem Grundschieber angreift. Diese Variante soll nachfolgend als 3-Schienen-System bezeichnet werden, da neben den Schienen für den Stell- und den Parksperrenschieber genau eine zusätzliche, über den Schwenkhebel gekoppelte weitere Schiene, nämlich die für den Grundschieber, an dem sowohl die Vorspannfeder als auch die elektromagnetische Verriegelung angreifen, erforderlich ist. Alternativ hierzu kann vorgesehen sein, dass nur eine der zwei Funktionseinheiten Vorspannfeder und elektromagnetische Verriegelung an dem Grundschieber angreift, während die andere dieser zwei Funktionseinheiten an einem relativ zur Gehäuseplatte linear verschieblichen Hilfsschieber angreift, an welchem der Schwenkhebel an einer zweiten weiteren Anlenkstelle schwenkbar gelagert ist. Diese Variante soll nachfolgend als 4-Schienen-System angesprochen werden, da neben den Schienen für den Stell- und den Parksperrenschieber zwei zusätzliche, über den Schwenkhebel gekoppelte weitere Schienen erforderlich sind, nämlich eine für den Grundschieber, an dem entweder die Vorspannfeder oder die elektromagnetische Verriegelung angreift, sowie eine für den Hilfsschieber, an dem entsprechend entweder die elektromagnetische Verriegelung oder die Vorspannfeder angreift.

Unabhängig von der Ausgestaltung als 3- oder 4-Schienen-System ist die elektromagnetische Verriegelung bevorzugt als ein mit einer magnetisch wirksamen Haftscheibe desjenigen Schiebers, an dem sie angreift, wechselwirkender Elektromagnet ausgebildet. Eine solche schaltbar kraftschlüssige Verriegelung erfordert im Vergleich zu einer (auch) formschlüssigen Verriegelung zwar einen stärkeren Elektromagneten. Dafür ist aber sichergestellt, dass ein Systemausfall, d.h. insbesondere ein Zusammenbruch der elektrischen Versorgung, zuverlässig zu einem Lösen der Verriegelung und somit zu einer sicheren Überführung des Grundhebels in seine Grundstellung führt, aus der dann die Sicherheits- und Komfortfunktionen gestartet werden können.

Die Änderung der Hebelkopplung zwischen Stellschieber und Parksperrenschieber durch die erfindungsgemäße Verschiebung des Grundschiebers kann mit Änderungen der effektiven Hebellänge des Schwenkhebels verbunden sein - dies insbesondere, wenn die Schienen von Stell-, Sperr- und Grundschieber, wie bevorzugt vorgesehen, gerade und parallel zueinander verlaufen. Um eine solche Hebellängenänderung ausgleichen zu können, ist bevorzugt vorgesehen, dass wenigstens eine Lagerstelle des Schwenkhebels sowie jede weitere Anlenkstelle zusätzlich zu der Schwenkbewegung eine axiale Bewegungskomponente des Schwenkhebels zulässt. Insbesondere kann sie als ein einen Bolzen umgreifendes Langloch ausgebildet ist, wobei es weitgehend irrelevant ist, welches der jeweils zusammenwirkenden Elemente das Langloch und welches den Bolzen trägt.

Um zusätzliche Komfortfunktionalitäten realisieren zu können, ist es vorteilhaft, wenn der Stellschieber durch eine Verschiebung in die - ausgehend von seiner Zentralstellung - der ersten ausgelenkten Schiebestellung entgegengesetzten Richtung in eine zweite ausgelenkte Schiebestellung verschiebbar ist. Funktionsbeispiele hierfür sollen weiter unten ausführlicher diskutiert werden.

Der Stellantrieb ist bevorzugt als ein insbesondere selbsthemmender, mittels eines Elektromotors angetriebener Spindeltrieb ausgebildet. Andere Arten von Stellantrieben, die eine lineare Verschiebung des Stellschiebers bewirken können, sind selbstverständlich ebenso einsetzbar. Der selbsthemmende elektromotorische Spindeltrieb hat jedoch den Vorteil besonderer konstruktiver Einfachheit und Zuverlässigkeit.

Um eine automatisierte Ansteuerung der erfindungsgemäßen Betätigungsanordnung zu ermöglichen, ist es wünschenswert, dass eine entsprechende Steuereinheit stets über die aktuellen Positionen bzw. Orientierungen der beteiligten Elemente informiert ist. Bei einer Weiterbildung der Erfindung ist daher vorgesehen, dass die Stellungen der Schieber mittels einer elektronischen Sensorik, die insbesondere wenigstens einen Hall-Sensor umfasst, erfassbar sind. Auch Informationen, die im Fahrzeug typischerweise ohnehin erfasst werden, wie z.B. Fehlerdiagnoseinformationen, können zur Steuerung der erfindungsgemäßen Betätigungsvorrichtung hilfreich sein.

Günstigerweise ist der Parksperrenschieber mittels einer an ihm angreifenden, manuellen Notentriegelung von seiner Einrückstellung in seine Ausrückstellung überführbar. Dies ist im Fall eines abgestellten Fahrzeugs mit Ausfall des automatischen Parksperrensystems hilfreich. Bei ordnungsgemäßem Abstellen des Fahrzeugs wird die Parksperre eingelegt. Ein anschließender Systemausfall verhindert ihr automatisches Auslegen bei Wiederinbetriebnahme oder sogar die Wiederinbetriebnahme selbst. Ein notwendiges Abschleppen des Fahrzeugs wird durch die eingelegte Parksperre erschwert. Derselbe Zustand liegt vor, wenn der Systemausfall vor dem Abstellen des Fahrzeugs erfolgt. Dann sorgen die Sicherheitsmechanismen, insbesondere die federbedingte Überführung des Grundschiebers in seine Grundstellung, dafür, dass bei Unterschreitung der Grenzgeschwindigkeit die Parksperre eingelegt wird. Auch in diesem Fall ist also ein Abschleppen des Fahrzeugs erschwert. Die genannte Weiterbildung der Erfindung ermöglicht jedoch ein manuelles Auslegen der Parksperre, sodass das Fahrzeug problemlos abgeschleppt werden kann.

Bei einer besonders bevorzugten Ausführungsform ist dabei vorgesehen, dass die manuelle Notentriegelung eine über ein Übersetzungsgetriebe relativ zur Gehäuseplatte rotierbare, exzentrische und mit einem Widerlager am Parksperrenschieber wechselwirkenden Formscheibe umfasst. Das Übersetzungsgetriebe weist dabei vorzugsweise eine Eingangswelle mit einer im Montageendzustand des Kraftfahrzeugs zugänglichen Werkzeug-Ansatzstelle zur Einleitung eines Drehmomentes auf. Ein aufgrund der Übersetzung im Übersetzungsgetriebe vergleichsweise geringes, manuell aufbringbares Drehmoment an der Eingangswelle führt zu einer Rotation der Formscheibe, deren Exzenter sodann den Parksperrenschieber von seiner Ein- in seine Ausrückstellung überführt.

Bei einer alternativen Ausführungsform ist vorgesehen, dass die manuelle Notentriegelung ein flexibles, in einer zur Verschieberichtung des Parksperrenschiebers parallelen Zugrichtung bewegbares Zugelement mit einem im Montageendzustand des Kraftfahrzeugs zugänglichen Handgriff aufweist, welches ein senkrecht zur Verschiebungsrichtung des Parksperrenschiebers vorstehendes Widerlager mit Axialspiel umgreift. Diese Variante ist konstruktiv einfacher, erfordert aber aufgrund des Fehlens eines Übersetzungsgetriebes einen höheren manuellen Kraftaufwand.

Bei beiden vorgenannten Varianten greift die manuelle Notentriegelung direkt am Parksperrenschieber an. Alternativ dazu kann, zumindest bei Ausführungsformen mit einem elektromotorischen Spindeltrieb als Stellschieber-Schiene, vorgesehen sein, dass der Spindeltrieb von dem Elektromotor abkoppelbar und mittels einer ein Übersetzungsgetriebe umfassenden, manuellen Notentriegelung antreibbar ist. Auch hier weist das Übersetzungsgetriebe vorzugsweise eine Eingangswelle mit einer im Montageendzustand des Kraftfahrzeugs zugänglichen Werkzeug-Ansatzstelle zur Einleitung eines Drehmomentes auf. Der aufgrund des Systemausfalls nicht mehr funktionstüchtige Elektromotor kann bei dieser Ausführungsform abgekoppelt und durch einen manuellen Antrieb ersetzt werden. Die manuelle Notentriegelung greift bei dieser Ausführungsform also nur mittelbar über den Stellschieber und den Schwenkhebel am Parksperrenschieber an.

Weitere Merkmale und Vorteile der Erfindung ergeben sich aus der nachfolgenden, speziellen Beschreibung und den Zeichnungen.

Es zeigen:
- Figur 1:: eine perspektivische Darstellung der mechanischen Komponenten einer erfindungsgemäßen Betätigungsanordnung in einer Ausführungsform als 3-Schienen-System,
- Figur 2:: die Anordnung von Figur 1 in ihrer Ruhestellung,
- Figur 3:: die Anordnung von Figur 1 in ihrer aktivierten Stellung / Einlegestellung,
- Figur 4:: die Anordnung von Figur 1 in ihrer Auslegestellung,
- Figur 5:: die Anordnung von Figur 1 in ihrer motorischen Notauslegestellung,
- Figur 6:: die Anordnung von Figur 1 in ihrer manuellen Notauslegestellung (ausgehend von der aktivierten Stellung / Einlegestellung Fig. 3),
- Figur 7:: eine Ausführungsform einer manuellen Notentriegelung,
- Figur 8:: eine alternative Ausführungsform einer manuellen Notentriegelung in drei Funktionsstellungen,
- Figur 9:: eine Schema-Skizze des 3-Schienen-Systems der Betätigungsanordnung der Figuren 1 bis 7,
- Figur 10:: eine Schemaskizze einer erfindungsgemäßen Betätigungsanordnung in einer Ausführungsform als 4-Schienen-System.

Gleiche Bezugszeichen in den Figuren weisen auf gleiche oder analoge Elemente hin.

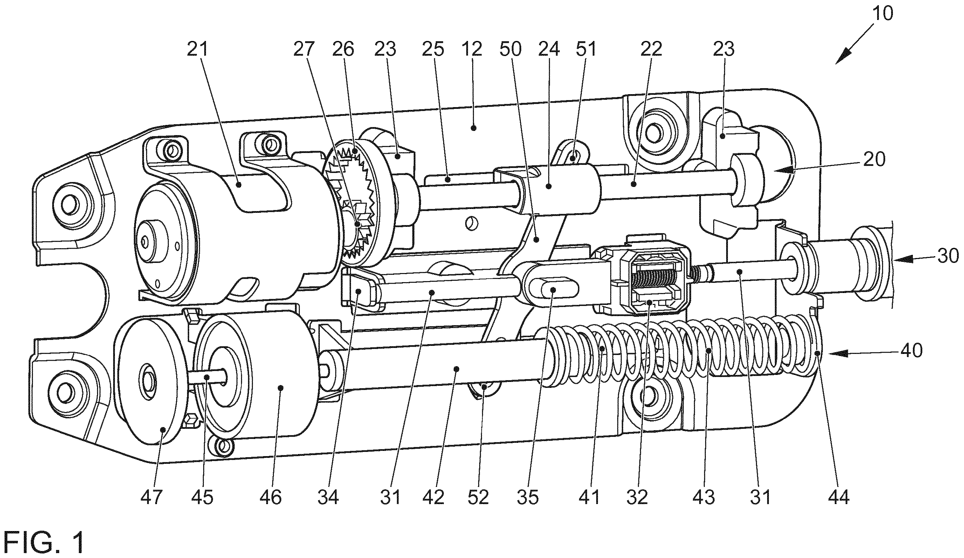

Figur 1 zeigt in einer perspektivischen Darstellung die mechanischen Komponenten einer erfindungsgemäßen Betätigungsanordnung 10 für eine Kraftfahrzeug-Parksperre in einer bevorzugten Ausführungsform als 3-Schienen-System. In Figur 1 nicht dargestellt sind einige zusätzliche mechanische Komponenten, wie etwa eine Notentriegelung, auf die weiter unten noch eingegangen werden soll, sowie für die Ansteuerung erforderliche elektronische Komponenten. Gleichwohl soll die in Figur 1 dargestellte Baueinheit vereinfachend als Betätigungsanordnung 10 bezeichnet werden. Das mechanische System ist auf einer als Basis fungierenden Gehäuseplatte 12 aufgebaut. Drei relativ zur Gehäuseplatte 12 linear verschiebliche Schieber 24, 34, 42 sind in geradlinig parallelen Schienen 20, 30, 40 angeordnet. In Figur 1 ist die Stellschiene 20 oben dargestellt, darunter die Sperrschiene 30 und darunter die Grundschiene 40. Die Stellschiene 20 ist als von einem Elektromotor 21 antreibbarer Spindeltrieb ausgebildet. Eine nicht im Detail ihres Außengewindes dargestellte Spindel 22 ist rotierbar in Lagerböcken 23 an der Gehäuseplatte 12 gelagert. Auf der Spindel 22 ist ein Stellschieber 24 in Form einer Spindelmutter angeordnet, deren Fuß in einer Nut 25 in der Gehäuseplatte 12 geführt ist. Die Spindel 22 ist an ihrem dem Elektromotor 21 zugewandten Ende mit einem Hohlrad 26 verbunden, welches mit einem Antriebsritzel 27 des Elektromotors 21 kämmt. Der Betrieb des Elektromotors 21 führt somit über eine Rotation der Spindel 22 zu einer Linearverschiebung des Stellschiebers 24.

Die Sperrschiene 30 umfasst im Wesentlichen einen in einer in Figur 1 nicht erkennbaren Nut der Gehäuseplatte 12 geführten Parksperrenschieber 31, der einerseits über ein Koppelstück 32 mit einem Seilzug 33 verbunden ist und der andererseits gegen einen Anschlag 34 der Gehäuseplatte 12 fährt. Seilzug repräsentiert die Parksperrensteuerstrecke, über die die eigentliche Parksperrenmechanik mit ihrer Betätigungsanordnung 10 verbunden ist. Bei der dargestellten Ausführungsform weist der Parksperrenschieber 31 einen senkrecht zu seiner Verschiebungsrichtung vorstehenden Absatz auf, der, wie weiter unten näher ausgeführt werden soll, als Widerlager 35 für eine manuelle Notentriegelung dienen kann.

Die Grundschiene 40 umfasst bei der dargestellten Ausführungsform einen in einer Nut 41 der Gehäuseplatte 12 geführten Grundschieber 42, der an seinem einen Ende über eine Druckfeder 43 gegen einen Federanschlag 44 der Gehäuseplatte 12 gelagert und dadurch in die entgegengesetzte Richtung federvorgespannt ist. An seinem der Druckfeder 43 abgewandten Ende weist der Grundschieber 42 eine Stößelstange 45 auf, die einen Elektromagneten 46 axial durchsetzt und an ihrem freien Ende eine magnetisch wirksame, insbesondere ferromagnetische Haftscheibe 47 trägt.

Die drei Schieber 24, 31, 42 sind relativ zur Gehäuseplatte 12 linear verschieblich. Ihre Verschieblichkeit ist jedoch nicht vollkommen unabhängig, da sie mittels eines Schwenkhebels 50 miteinander gekoppelt sind. Der Schwenkhebel 50 ist an jedem der drei Schieber 24, 31, 42, an entsprechenden Lager- bzw. Anlenkstellen angelenkt. Bei der dargestellten Ausführungsform hat die Anlenkung am Parksperrenschieber 31, d. h. die Parksperrenschieber-Lagerstelle, genau einen Freiheitsgrad, nämlich den rotatorischen Freiheitsgrad um eine senkrecht zur Gehäuseplatte 12 ausgerichtete Drehachse. Die Stellschieber-Lagerstelle, über die der Schwenkhebel 50 am Stellschieber 24 angelenkt ist, hat hingegen zwei Freiheitsgrade. Neben dem rotatorischen Freiheitsgrad ist dies ein in Bezug auf den Schwenkhebel 50 axialer Freiheitsgrad. Dieser ist insbesondere durch ein Langloch 51 realisiert, welches einen in Figur 1 nicht erkennbaren Bolzen des Stellschiebers 24 umgreift. In analoger Weise hat auch die erste weitere Anlenkstelle, über die der Schwenkhebel 50 am Grundschieber 42 angelenkt ist, einen rotatorischen und einen in Bezug auf den Schwenkhebel 50 axialen Freiheitsgrad, der insbesondere durch ein Langloch 52 im Schwenkhebel 50 und einen in Figur 1 nicht erkennbaren Bolzen am Grundhebel 42 realisiert ist.

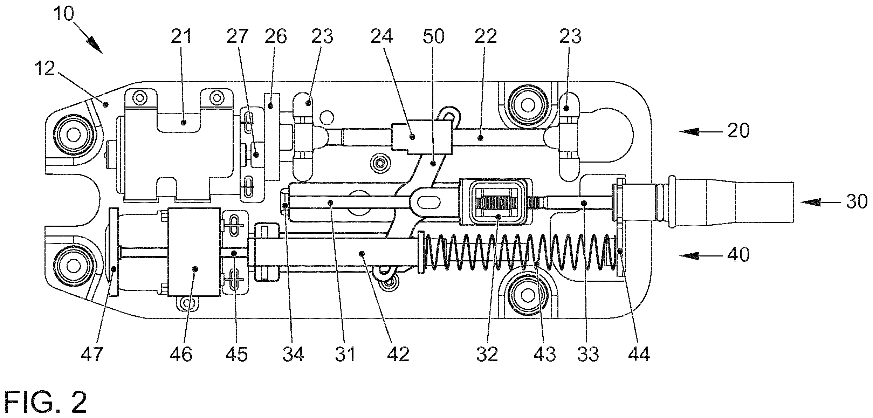

Die Funktionsweise der Betätigungsanordnung 10 soll nachfolgend anhand der Figuren 2 bis 6 erläutert werden, die unterschiedliche Funktionsstellungen der Betätigungsanordnung 10 zeigen.

Figur 2 zeigt die Betätigungsanordnung 10 von Figur 1 in ihrer nachfolgend als Ruhestellung bezeichneten Funktionsstellung. Die Ruhestellung wird insbesondere beim ordnungsgemäßen Abstellen des Kraftfahrzeugs eingenommen. Der Stellschieber 24 befindet sich dabei in seiner Zentralstellung, von der aus eine Überführung sowohl nach rechts als auch nach links möglich ist, wie weiter unten noch weiter erläutert wird. Der Elektromagnet 46 der Grundschiene ist in der Ruhestellung der Betätigungsanordnung 10 nicht bestromt, sodass sich der Grundschieber 42, der Vorspannfederkraft der Druckfeder 43 folgend, in seiner maximal linken Position, die hier als Grundstellung beschrieben wird, befindet. Durch diese Randbedingungen ist die Lage des Schwenkhebels 50 derart bestimmt, dass der Parksperrenschieber 31 in seine hier als Einrückstellung bezeichnete, am Anschlag 34 anliegende, maximal linke Stellung gezwungen wird. In dieser Position findet sich die über den Seilzug 33 angekoppelte, eigentliche Parksperre in ihrem eingelegten Zustand.

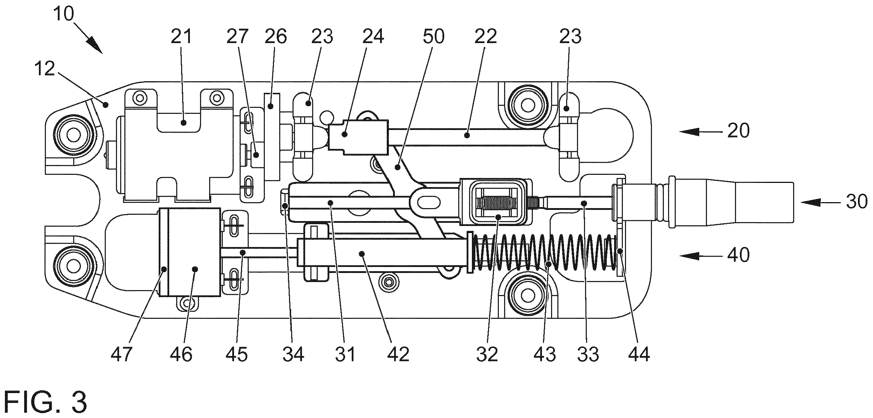

Beim ordnungsgemäßen Starten des Kraftfahrzeugs wird die Parksperrenanordnung 10 in ihre in Figur 3 dargestellte aktivierte Stellung überführt. Hierzu wird der Stellschieber 24 mittels des Elektromotors 21 in seine maximal linke Stellung überführt, die hier als erste ausgelenkte Schiebestellung bezeichnet wird. Die Parksperrenschieber-Lagerstelle des am Anschlag 34 anliegenden Parksperrenschiebers 31 wirkt dabei als fixierter Drehpunkt für den Schwenkhebel 50. Entsprechend wird der über die erste weitere Anlenkstelle angekoppelte Grundschieber 42 entgegen der Vorspannfederkraft der Druckfeder 43 nach rechts verschoben, wodurch die in der Druckfeder 43 gespeicherte Energie vergrößert wird. Die Verschiebung des Grundschiebers 42 setzt sich über die Stößelstange 45 auch auf die Haftscheibe 47 fort, die dadurch zur Anlage an dem Elektromagneten 46 kommt. Dieser wird nun bestromt, sodass der Grundschieber 42 in seiner Vorspannstellung fixiert ist. Die Parksperre ist in diesem Betriebszustand nach wie vor eingelegt.

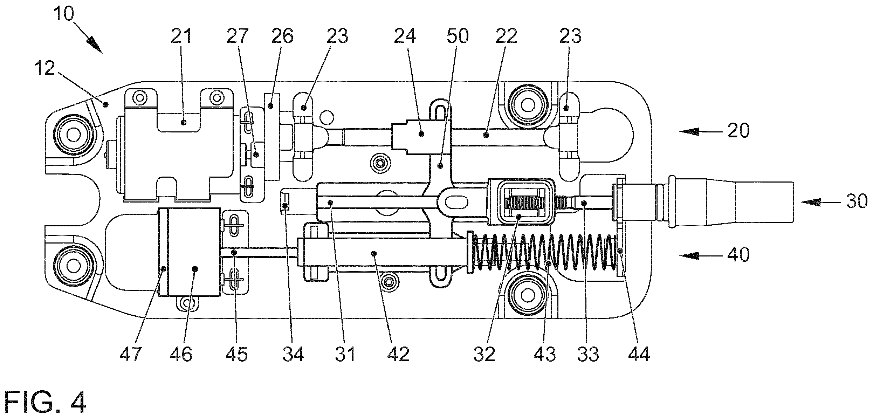

Das Auslegen der Parksperre erfolgt durch Rücküberführung des Stellschiebers 24 in seine Zentralstellung. Auf Grund der oben erläuterten Fixierung des Grundschiebers 42 mittels des Elektromagneten 46 wirkt die erste weitere Anlenkstelle des Schwenkhebels 50 am Grundschieber 42 dabei als fixierter Drehpunkt des Schwenkhebels 50. Die Verschiebung des Stellschiebers 24 hat daher eine Verschiebung des Parksperrenschiebers 31 in seine Ausrückstellung zur Folge. Über den Seilzug 33 wird diese Bewegung an die eigentliche Parksperre übertragen, die daraufhin ausgelegt wird. Entsprechend wird die hier beschriebene Funktionsstellung der Betätigungsanordnung 10 als Auslegestellung bezeichnet. Bei ordnungsgemäßem Betrieb erfolgen weitere Ein- und Auslegevorgänge der Parksperre durch Überführung des Stellschiebers 24 zwischen der Auslegestellung (Figur 4) und der zuvor beschriebenen Einlege- bzw. aktivierten Stellung (Figur 3). Beim ordnungsgemäßen Abstellen des Fahrzeugs erfolgt die Rücküberführung in die Ruhestellung von Figur 2 und zwar aus der Einlegestellung von Figur 3 heraus durch Abschalten der Bestromung des Elektromagneten 46 und Überführung des Stellschiebers 24 in seine Zentralstellung oder aus der Auslegestellung von Figur 4 heraus durch bloße Abschaltung der Bestromung des Elektromagneten 46.

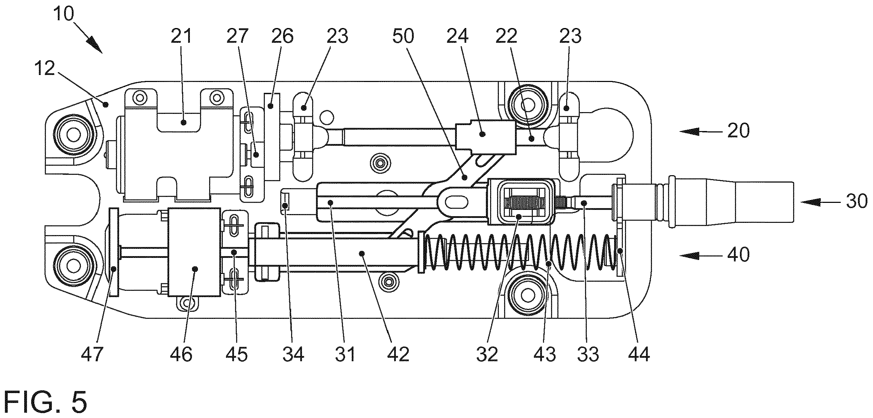

Figur 5 zeigt eine motorische Notauslegestellung, die eingenommen werden kann, wenn der Elektromagnet 46 ausfallen sollte, während der Elektromotor 21 jedoch funktionstüchtig bleibt. Der Elektromagnet 46 kann in der Ruhestellung oder in der Einlege- bzw. aktivierten Stellung ausfallen. In beiden Fällen ist die Parksperre eingelegt. Ein Anfahren oder ein Rollen beim Abschleppen des Fahrzeugs ist nicht möglich. Eine Betätigung des Elektromotors 21 zur Verschiebung des Stellschiebers 24 zwischen seiner Zentralstellung und seiner ersten ausgelenkten Schiebestellung führt lediglich zu einem Wechsel zwischen der genannten Ruhe- und der genannten Einlege- bzw. aktivierten Stellung, letztere allerdings ohne Aktivierung des Elektromagneten 46. Bei der dargestellten Ausführungsform der Erfindung ist es möglich, den Stellschieber 24 in eine zweite ausgelenkte Stellung zu überführen, wie in Figur 5 gezeigt. Hierzu wird der Stellschieber 24 über seine Zentralstellung hinaus in die der ersten ausgelenkten Schiebestellung entgegengesetzte Richtung, d. h. nach ganz Rechts in Figur 5, verschoben. Entweder ist dabei für die Haftscheibe 24 ein gesonderter Anschlag vorgesehen, oder die Druckfeder 43 befindet sich in einem entlasteten Zustand und beginnt als Zugfeder zu wirken. In jedem Fall ist die erste weitere Anlenkstelle des Schwenkhebels 50 am Grundschieber 42 weitgehend fixiert. Die extreme Überstreckung des Schwenkhebels 50 durch die Verschiebung des Stellschiebers 24 in seine zweite ausgelenkte Schiebestellung zwingt den Parksperrenschieber 31 nach rechts in Figur 5, d. h. in seine Ausrückstellung. Dadurch wird die Parksperre ausgelegt und das Fahrzeug kann abgeschleppt werden.

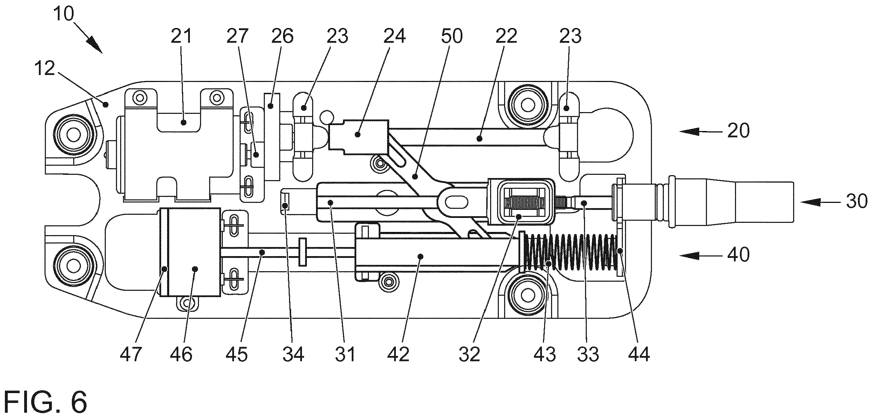

Für den Fall, dass auch der Elektromotor 46 ausfällt, sieht die dargestellte Ausführungsform der Erfindung eine in Figur 6 dargestellte manuelle Notentriegelungsstellung vor. Diese basiert auf einer separaten, manuell initiierten Verschiebung des Parksperrenschiebers 31, unabhängig von der Stellung des Stellschiebers 24 (der in Figur 6 in seiner ersten ausgelenkten Schiebestellung dargestellt ist). Die separate Verschiebung des Parksperrenschiebers 31 ist möglich, da das am Grundschieber 42 angelenkte Ende des Schwenkhebels 50 auf Grund des ausgefallenen Elektromagneten 46 weitgehend frei beweglich ist.

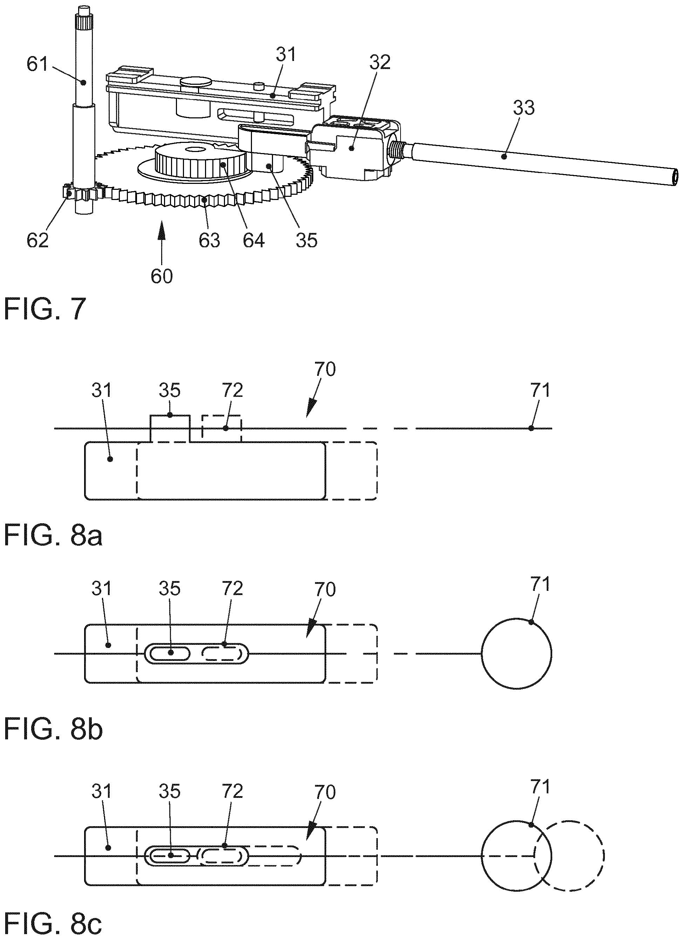

Figur 7 zeigt eine besonders bevorzugte Ausführungsform einer manuellen Notentriegelung. Diese umfasst ein Übersetzungsgetriebe 60 mit einer Eingangswelle 61, welche ein (kleines) Eingangsrad 62 trägt. Dieses kämmt mit einem (großen) Ausgangsrad 63, welches einen Exzenternocken 64 trägt. Mittels eines an der Eingangswelle 61 ansetzenden Werkzeugs kann ein Drehmoment in das Übersetzungsgetriebe 60 eingeleitet werden, sodass eine Rotation des Exzenternockens 64 erfolgt. Dieser liegt an dem Widerlager 35 des Parksperrenschiebers 31 an und beaufschlagt ihn bei Rotation mit einer Linearkraft. Hierdurch wird der Parksperrenschieber 31 separat in seine Ausrückstellung verschoben. Über den Seilzug 33 erfolgt das gewünschte Notauslegen der Parksperre. Die Eingangswelle 61 weist bevorzugt ein Ansatzstück für ein Werkzeug auf. Hierbei kann es sich bspw. um einen Innensechskant-Kopf handeln, der im Montageendzustand des Fahrzeugs bspw. für einen handgeführten Akkuschrauber zur Aufbringung des erforderlichen Drehmomentes zugänglich ist. Als mögliche Alternative könnte auch, wie in Figur 7 angedeutet, ein weiteres Ritzel vorgesehen sein, welches bspw. mit einer flexiblen Zahnstange, die günstigerweise für Notfälle im Gehäuse der Betätigungsanordnung 10 bereitgehalten wird, betätigbar ist.

Figur 8 zeigt in ihren drei Teilfiguren a-c eine alternative Ausführungsform einer manuellen Notentriegelung. Diese umfasst ein flexibles Zugmittel 70 mit einem Handgriff 71 und einer Öse 72, die das Widerlager 35 des Parksperrenschiebers 31 mit Axialspiel umgreift. Das Axialspiel muss so groß gestaltet sein, dass die oben erläuterten, ordnungsgemäßen Bewegungen des Parksperrenschiebers 31 nicht beeinträchtigt werden. Es muss andererseits so klein gestaltet sein, dass ein Zug am Griff 71 nach geringem Totweg auf den Parksperrenschieber 31 übertragen wird. Zur Verdeutlichung sind in den Teilfiguren 8a und 8b die Einrückstellung (durchgezogene Linien) und die ordnungsgemäß erreichte Ausrückstellung (gestrichelte Linien) dargestellt, während in Teilfigur 8c die Einrückstellung (durchgezogene Linien) und die durch manuelle Notentriegelung erreichte Ausrückstellung (gestrichelte Linien) dargestellt sind.

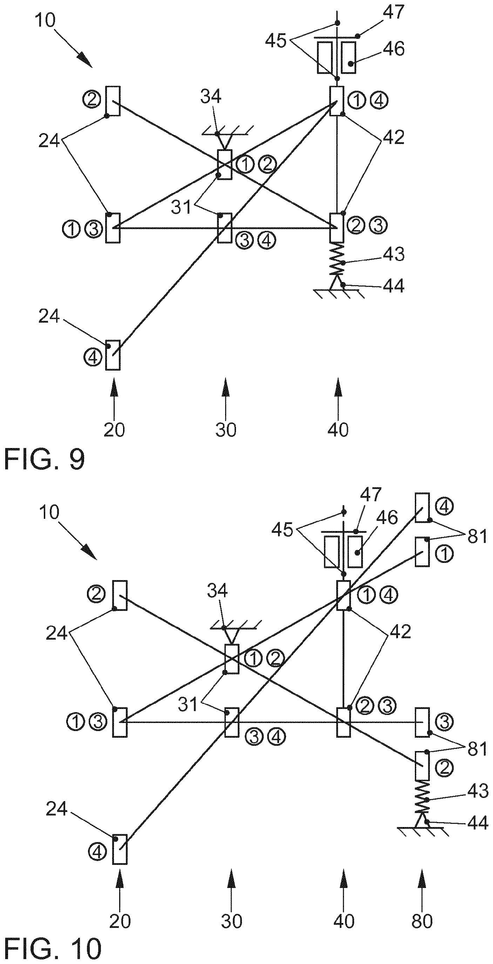

Figur 9 zeigt das 3-Schienen-System, welches der oben erläuterten Ausführungsform der Figuren 1-6 zugrunde liegt, in stark abstrahierter Schematisierung. Die jeweils in einem Kreis dargestellten Ziffern weisen auf die einzelnen Positionen der drei Schieber 24, 31, 42 in den oben diskutierten Positionskonstellationen, d. h. den unterschiedlichen Funktionsstellungen der Betätigungsanordnung 10 hin. "1" entspricht dabei der Grundstellung, "2" der aktivierten bzw. Einlegestellung, "3" der Auslegestellung und "4" der motorischen Notentriegelungsstellung. Aus Gründen der Übersichtlichkeit ist die manuelle Notentriegelungsstellung in Figur 9 nicht dargestellt.

Figur 10 zeigt eine Variante der erfindungsgemäßen Betätigungsanordnung 10, die auf einem 4-Schienen-System beruht. Während beim 3-Schienen-System sowohl die Druckfeder 43 als auch der Elektromagnet 46 (über die Haftscheibe 47) direkt am Grundschieber angreifen, ist bei der Ausführungsform von Figur 4 eine Hilfsschiene 80 als vierte, parallele Schiene vorgesehen, an deren Hilfsschieber 81 die Druckfeder 43 angreift, während am Grundschieber 42 lediglich der Elektromagnet 46 (über die Haftscheibe 47) direkt angreift. Der Hilfsschieber 81 ist über eine zweite weitere Anlenkstelle am Schwenkhebel 50 angelenkt und daher mit dem Grundschieber 42 helebgekoppelt. Die Druckfeder 43 greift somit indirekt über diese Hebelkopplung am Grundschieber 42 an. Im Übrigen kann analog auf die obigen Erläuterungen verwiesen werden.

Natürlich stellen die in der speziellen Beschreibung diskutierten und in den Figuren gezeigten Ausführungsformen nur illustrative Ausführungsbeispiele der vorliegenden Erfindung dar. Bspw. kann statt einer Druck- eine Zugfeder als Energiespeicher am Grund- bzw. am Hilfsschieber vorgesehen sein. Die erforderlichen, konstruktiven Umgestaltungen kann der Fachmann leicht durch kinematische Umkehr ermitteln. Außerdem kann die Reihenfolge der Anordnung der einzelnen Schienen von den in den Figuren gezeigten Ausführungsbeispielen abweichen. Wesentlich ist die Kopplung der einzelnen Schieber über den Schwenkhebel, wobei die genaue Positionierung der einzelnen Elemente selbstverständlich von den verwendeten Dimensionen abhängen und vom Fachmann leicht auf den Einzelfall angepasst werden kann. Im Fall des 4-Schienen-Systems ist es zudem selbstverständlich austauschbar, welche der beiden Funktionseinheiten Vorspannfeder und elektromagnetische Verriegelung am Grundschieber bzw. am Hilfsschieber angreift.

### Bezugszeichenliste

- 10: Betätigungsanordnung
- 12: Gehäuseplatte
- 20: Stellschiene
- 21: Elektromotor
- 22: Spindel
- 23: Lagerbock
- 24: Stellschieber
- 25: Nut
- 26: Hohlrad
- 27: Antriebsritzel
- 30: Parksperrenschiene
- 31: Parksperrenschieber
- 32: Koppelstück
- 33: Seilzug
- 34: Anschlag
- 35: Widerlager
- 40: Grundschiene
- 41: Nut
- 42: Grundschieber
- 43: Druckfeder
- 44: Federanschlag
- 45: Stößelstange
- 46: Elektromagnet
- 47: Haftscheibe
- 50: Schwenkhebel
- 51: Langloch
- 52: Langloch
- 60: Übersetzungsgetriebe
- 61: Eingangswelle
- 62: Eingangsrad
- 63: Ausgangsrad
- 64: Exzenternocken
- 70: Zugmittel
- 71: Griff
- 72: Öse
- 80: Hilfsschiene
- 81: Hilfsschieber

## Patentansprüche

1. Betätigungsanordnung (10) für eine Parksperre für ein Kraftfahrzeug, umfassend
- einen Stellantrieb mit einem relativ zu einer Gehäuseplatte (12) linear zwischen einer Zentralstellung und einer ersten ausgelenkten Schiebestellung verschieblichen Stellschieber (24),
- einen zwischen einer Einrückstellung und einer Ausrückstellung relativ zur Gehäuseplatte (12) linear verschieblichen Parksperrenschieber (31), der über eine Parksperrensteuerstrecke (33) mit einer Parksperre koppelbar ist, sodass in seiner durch einen gehäuseplattefesten Anschlag (34) definierten Einrückstellung ein Einlegen der Parksperre erlaubt und in seiner Ausrückstellung unterbunden ist, und
- einen Schwenkhebel (50), der sowohl an einer Stellschieber-Lagerstelle an dem Stellschieber (24) als auch an einer Parksperrenschieber-Lagerstelle an dem Parksperrenschieber (31) schwenkbar gelagert ist und der zudem an einer ersten weiteren Anlenkstelle schwenkbar gelagert ist, sodass mittels einer Verschiebung des Stellschiebers (24) eine entsprechend hebelübersetzte Verschiebung des Parksperrenschiebers (31) bewirkt wird,
**dadurch gekennzeichnet,**
**dass** die erste weitere Anlenkstelle auf einem relativ zur Gehäuseplatte (12) linear verschieblichen Grundschieber (42) liegt, der zwischen einer Grundstellung und einer Vorspannstellung verschiebbar ist und der mittels einer Vorspannfeder (43) in Richtung seiner Grundstellung federkraftbeaufschlagt und in seiner entgegen der Vorspannfederkraft verschobenen Vorspannstellung mittels einer der Vorspannfederkraft entgegenwirkenden, elektromagnetischen Verriegelung (46, 47) haltbar ist.

2. Betätigungsanordnung (10) nach Anspruch 1,
**dadurch gekennzeichnet,**
**dass** jede der zwei Funktionseinheiten Vorspannfeder (43) und die elektromagnetische Verriegelung (46, 47) an dem Grundschieber (42) angreift.

3. Betätigungsanordnung (10) nach Anspruch 1,
**dadurch gekennzeichnet,**
**dass** nur eine der zwei Funktionseinheiten Vorspannfeder (43) und elektromagnetische Verriegelung (46, 47) an dem Grundschieber (42) angreift, während die andere dieser zwei Funktionseinheiten an einem relativ zur Gehäuseplatte (12) linear verschieblichen Hilfsschieber (81) angreift, an welchem der Schwenkhebel (50) an einer zweiten weiteren Anlenkstelle schwenkbar gelagert ist.

4. Betätigungsanordnung (10) nach einem der Ansprüche 2 bis 3,
**dadurch gekennzeichnet,**
**dass** die elektromagnetische Verriegelung als ein mit einer magnetisch wirksamen Haftscheibe (47) desjenigen Schiebers (42; 81), an dem sie angreift, wechselwirkender Elektromagnet (46) ausgebildet ist.

5. Betätigungsanordnung (10) nach einem der vorangehenden Ansprüche,
**dadurch gekennzeichnet,**
**dass** wenigstens eine Lagerstelle des Schwenkhebels (50) sowie jede weitere Anlenkstelle zusätzlich zu der Schwenkbewegung eine axiale Bewegungskomponente des Schwenkhebels (50) zulässt.

6. Betätigungsanordnung (10) nach einem der vorangehenden Ansprüche,
**dadurch gekennzeichnet,**
**dass** der Stellschieber (24) durch eine Verschiebung in die - ausgehend von seiner Zentralstellung - der ersten ausgelenkten Schiebestellung entgegengesetzten Richtung in eine zweite ausgelenkte Schiebestellung verschiebbar ist.

7. Betätigungsanordnung (10) nach einem der vorangehenden Ansprüche,
**dadurch gekennzeichnet,**
**dass** der Stellantrieb als ein mittels eines Elektromotors (21) angetriebener Spindeltrieb (22, 24) ausgebildet ist.

8. Betätigungsanordnung (10) nach einem der vorangehenden Ansprüche,
**dadurch gekennzeichnet,**
**dass** der Parksperrenschieber (31) mittels einer an ihm angreifenden, manuellen Notentriegelung von seiner Einrückstellung in seine Ausrückstellung überführbar ist.

9. Betätigungsanordnung (10) nach Anspruch 8,
**dadurch gekennzeichnet,**
**dass** die manuelle Notentriegelung eine über ein Übersetzungsgetriebe (60) relativ zur Gehäuseplatte (12) rotierbare, exzentrische und mit einem Widerlager (35) am Parksperrenschieber (31) wechselwirkenden Formscheibe (64) umfasst.

10. Betätigungsanordnung (10) nach Anspruch 8,
**dadurch gekennzeichnet,**
**dass** die manuelle Notentriegelung ein flexibles, in einer zur Verschieberichtung des Parksperrenschiebers (31) parallelen Zugrichtung bewegbares Zugelement (70) mit einem im Montageendzustand des Kraftfahrzeugs zugänglichen Handgriff (71) aufweist, welches ein senkrecht zur Verschiebungsrichtung des Parksperrenschiebers (31) vorstehendes Widerlager (35) mit Axialspiel umgreift.

11. Betätigungsanordnung (10) nach Anspruch 7,
**dadurch gekennzeichnet,**
**dass** der Spindeltrieb von dem Elektromotor (21) abkoppelbar und mittels einer ein Übersetzungsgetriebe umfassenden, manuellen Notentriegelung antreibbar ist.

12. Betätigungsanordnung (10) nach einem der Ansprüche 9 oder 11,
**dadurch gekennzeichnet,**
**dass** das Übersetzungsgetriebe (60) eine Eingangswelle (61) mit einer im Montageendzustand des Kraftfahrzeugs zugänglichen Werkzeug-Ansatzstelle zur Einleitung eines Drehmomentes aufweist.

## Claims

1. Actuating arrangement (10) for a parking lock for a motor vehicle, comprising
- an actuator having an adjusting slide (24) that is linearly displaceable relative to a housing plate (12) between a central position and a first deflected sliding position,
- a parking lock slide (31) that is linearly displaceable relative to the housing plate (12) between an engaged position and a disengaged position and can be coupled to a parking lock via a parking lock control path (33), so that an engagement of the parking lock is allowed in its engaged position, which is defined by a stop (34) fixed on the housing plate, and prevented in its disengaged position, and
- a pivot lever (50) which is pivotably mounted both on an adjusting slide bearing point on the adjusting slide (24) and also on a parking lock slide bearing point on the parking lock slide (31), and which is also pivotably mounted at a first further articulation point, so that a correspondingly lever-translated displacement of the parking lock slide (31) is brought about by a displacement of the adjusting slide (24),
**characterized in that**
the first further articulation point is on a bottom slide (42) that is linearly displaceable relative to the housing plate (12) and is displaceable between a bottom position and a pretensioned position, and which is spring-loaded by a pretensioning spring (43) in the direction of its bottom position, and can be held in its pretensioned position, which is displaced counter to the pretensioning spring force by an electromagnetic locking device (46, 47) counteracting the pretensioning spring force.

2. Actuating arrangement (10) according to claim 1,
**characterized in that**
each of the two functional units, pretensioning spring (43) and the electromagnetic locking device (46, 47), engages with the bottom slide (42).

3. Actuating arrangement (10) according to claim 1,
**characterized in that**
only one of the two functional units, pretensioning spring (43) and electromagnetic locking device (46, 47), engages with the bottom slide (42), while the other of these two functional units engages with an auxiliary slide (81) that is linearly displaceable relative to the housing plate (12) and on which the pivot lever (50) is pivotably mounted at a second further articulation point.

4. Actuating arrangement (10) according to any of claims 2 to 3,
**characterized in that**
the electromagnetic locking device is designed as an electromagnet (46) interacting with a magnetically operated adhesive disk (47) of the slide (42; 81) with which it engages.

5. Actuating arrangement (10) according to any of the preceding claims,
**characterized in that**
at least one bearing point of the pivot lever (50) as well as each further articulation point permits, in addition to the pivoting movement, an axial movement component by the pivot lever (50).

6. Actuating arrangement (10) according to any of the preceding claims,
**characterized in that**
the adjusting slide (24) is displaceable by a displacement in the direction which is - starting from its central position - opposite the first deflected sliding position into a second deflected sliding position.

7. Actuating arrangement (10) according to any of the preceding claims,
**characterized in that**
the actuator is formed as a spindle drive (22, 24) driven by an electric motor (21).

8. Actuating arrangement (10) according to any of the preceding claims,
**characterized in that**
the parking lock slide (31) can be transferred from its engaged position to its disengaged position by means of a manual emergency release acting thereupon.

9. Actuating arrangement (10) according to claim 8,
**characterized in that**
the manual emergency release comprises a shaped disk (64) that is rotatable relative to the housing plate (12) via a reduction gear (60), eccentric, and interacts with a thrust bearing (35) on the parking lock slide (31).

10. Actuating arrangement (10) according to claim 8,
**characterized in that**
the manual emergency release has a flexible traction element (70) that is movable in a tensile direction which is parallel to the displacement direction of the parking lock slide (31) and has a handle (71) which is accessible when the motor vehicle is in a state of final assembly, and which encloses a thrust bearing (35) that projects perpendicular to the displacement direction of the parking lock slide (31) with axial play.

11. Actuating arrangement (10) according to claim 7,
**characterized in that**
the spindle drive can be decoupled from the electric motor (21) and can be driven by means of a manual emergency release comprising a reduction gear.

12. Actuating arrangement (10) according to any of claims 9 or 11,
**characterized in that**
the reduction gear (60) has an input shaft (61) with a tool attachment point that is accessible when the motor vehicle is in a state of final assembly for introducing torque.

## Revendications

1. Dispositif d'actionnement (10) d'un frein de stationnement d'un véhicule automobile, comprenant
- un actionneur comprenant un coulisseau de commande (24) pouvant coulisser linéairement par rapport à une plaque de boîtier (12) entre une position centrale et une première position de coulissement déviée,
- un coulisseau de frein de stationnement (31) pouvant coulisser linéairement par rapport à la plaque de boîtier (12) entre une position engagée et une position dégagée, lequel peut être accouplé à un frein de stationnement par le biais d'une section de commande de frein de stationnement (33), de manière à permettre, dans sa position engagée définie par une butée (34) fixée sur la plaque de boîtier, et à supprimer, dans sa position dégagée, un engagement du frein de stationnement et
- un levier pivotant (50), lequel est monté pivotant tant sur un point d'appui de coulisseau de commande sur le coulisseau de commande (24) que sur un point d'appui de coulisseau de frein de stationnement sur le coulisseau de frein de stationnement (31) et lequel est en outre monté pivotant sur un premier autre point d'articulation, de sorte qu'au moyen d'un coulissement du coulisseau de commande (24), un coulissement correspondant transmis par levier du coulisseau de frein de stationnement (31) soit provoqué,
**caractérisé en ce**
**que** le premier autre point d'articulation est situé sur un coulisseau de base (42) pouvant coulisser linéairement par rapport à la plaque de boîtier (12), lequel peut coulisser entre une position de base et une position de précontrainte et lequel est soumis à une force de ressort dans la direction de sa position de base au moyen d'un ressort de précontrainte (43) et peut être maintenu dans sa position de précontrainte coulissée à l'encontre de la force de ressort de précontrainte au moyen d'un verrou électromagnétique (46, 47) antagoniste à la force du ressort de précontrainte.

2. Dispositif d'actionnement (10) selon la revendication 1,
**caractérisé en ce**
**que** chacune des deux unités de fonctionnement, le ressort de précontrainte (43) et le verrou électromagnétique (46, 47), vient en prise avec le coulisseau de base (42).

3. Dispositif d'actionnement (10) selon la revendication 1,
**caractérisé en ce**
**que** seule une des deux unités de fonctionnement, le ressort de précontrainte (43) et le verrou électromagnétique (46, 47), vient en prise avec le coulisseau de base (42), tandis que l'autre de ces deux unités de fonctionnement entre en prise avec un coulisseau auxiliaire (81) pouvant coulisser linéairement par rapport à la plaque de boîtier (12), sur lequel le levier pivotant (50) est monté pivotant sur un deuxième autre point d'articulation.

4. Dispositif d'actionnement (10) selon l'une quelconque des revendications 2 ou 3,
**caractérisé en ce**
**que** le verrou électromagnétique est conçu comme un électroaimant (46) interagissant avec un crampon (47) magnétiquement efficace du coulisseau (42, 81) avec lequel il entre en prise.

5. Dispositif d'actionnement (10) selon l'une quelconque des revendications précédentes,
**caractérisé en ce**
**qu**'au moins un point d'appui du levier pivotant (50) ainsi que chaque autre point d'articulation permet, outre le mouvement pivotant, un composant de mouvement axial du levier pivotant (50).

6. Dispositif d'actionnement (10) selon l'une quelconque des revendications précédentes,
**caractérisé en ce**
**que** le coulisseau de commande (24) peut coulisser, par le biais d'un coulissement dans la direction, partant de sa position centrale, opposée à celle de la première position de coulissement déviée, dans une deuxième position de coulissement déviée.

7. Dispositif d'actionnement (10) selon l'une quelconque des revendications précédentes,
**caractérisé en ce**
**que** l'actionneur est conçu comme un actionneur à vis (22, 24) entraîné au moyen d'un moteur électrique (21).

8. Dispositif d'actionnement (10) selon l'une quelconque des revendications précédentes,
**caractérisé en ce**
**que** le coulisseau de frein de stationnement (31) peut être passé de sa position engagée à sa position dégagée au moyen d'un déverrouillage d'urgence manuel entrant en prise avec lui.

9. Dispositif d'actionnement (10) selon la revendication 8,
**caractérisé en ce**
**que** le déverrouillage d'urgence manuel comprend un disque de fonte (64) rotatif par le biais d'un engrenage de transmission (60) par rapport à la plaque de boîtier (12), excentrique et interagissant avec une butée (35) sur le coulisseau de frein de stationnement (31).

10. Dispositif d'actionnement (10) selon la revendication 8,
**caractérisé en ce**
**que** le déverrouillage d'urgence manuel présente un élément de traction (70) flexible pouvant être déplacé dans une direction de traction parallèle à la direction de coulissement du coulisseau de frein de stationnement (31), comprenant une poignée (71) accessible à l'état final de montage du véhicule automobile, laquelle entoure une butée (35) faisant saillie perpendiculairement à la direction de coulissement du coulisseau de frein de stationnement (31) avec un jeu axial.

11. Dispositif d'actionnement (10) selon la revendication 7,
**caractérisé en ce**
**que** l'actionneur à vis peut être découplé du moteur électrique (21) et peut être entraîné au moyen d'un déverrouillage d'urgence manuel comprenant un engrenage de transmission.

12. Dispositif d'actionnement (10) selon l'une quelconque des revendications 9 ou 11,
**caractérisé en ce**
**que** l'engrenage de transmission (60) présente un arbre d'entrée (61) comprenant un point d'attache d'outil accessible à l'état final de montage du véhicule automobile pour l'introduction d'un couple.
